# EUROPÄISCHE PATENTSCHRIFT

(11) **EP 1 652 611 B1**
(45) Veröffentlichungstag und Bekanntmachung des Hinweises auf die Patenterteilung: **27.04.2011**
(21) Anmeldenummer: 05022642.2
(22) Anmeldetag: 18.10.2005
(51) Int. Cl.: B23H 9/10

(54) **Verfahren zur Herstellung integral beschaufelter Rotoren**
Method for manufacturing integrally bladed rotors
Procédé de fabrication de rotors à aubage integral

(30) Priorität: 26.10.2004 DE 102004051854
(43) Veröffentlichungstag der Anmeldung: 03.05.2006
(73) Patentinhaber: MTU Aero Engines GmbH, 80995 München (DE)
(72) Erfinder: Bayer, Erwin, 85221 Dachau (DE); Bussmann, Martin, 85247 Schwabhausen (DE); Kränzler, Thomas, 88682 Salem (DE); Platz, Albin, 86510 Ried-Baindlkirch (DE); Steinwandel, Jürgen, 88690 Uhldingen-Mühlhofen (DE)

(56) Entgegenhaltungen:
- EP-A- 0 426 233
- EP-A- 1 314 507
- SU-A1- 965 689
- US-A- 3 288 699

## Beschreibung

Die Erfindung betrifft ein Verfahren zur Herstellung von integral beschaufelten Rotoren, insbesondere von Gasturbinenrotoren.

Ein derartiges Verfahren ist aus US3288699 bekannt.

Rotoren, wie zum Beispiel Gasturbinenrotoren, verfügen über einen Rotorgrundkörper sowie über mehrere Laufschaufeln. Die Laufschaufeln sind entweder über Schaufelfüße in entsprechenden Ausnehmungen des Rotorgrundkörpers verankert oder integraler Bestandteil des Rotorgrundkörpers. Rotoren mit integraler Beschaufelung bezeichnet man auch als blisk (bladed disk) oder als bling (bladed ring), abhängig davon, ob ein scheibenförmiger oder ein ringförmiger Rotorgrundkörper verwendet wird. Die hier vorliegende Erfindung betrifft nun ein Verfahren sowie eine Vorrichtung zur Herstellung eines Rotors mit integraler Beschaufelung.

Bei der Herstellung von integral beschaufelten Rotoren wird nach dem Stand der Technik üblicherweise so vorgegangen, dass in einen Rotorgrundkörper als Schaufelzwischenräume dienende Ausnehmungen zur Bereitstellung von Rohschaufeln eingearbeitet werden, wobei anschließend die Rohschaufeln einer Finishbearbeitung unterzogen werden. Das Herstellen der als Schaufelzwischenräume dienenden Ausnehmungen erfolgt nach dem Stand der Technik üblicherweise durch Fräsen. Das Fräsen ist jedoch insbesondere bei schwer zerspanbaren Werkstoffen problematisch und unwirtschaftlich. Das Herstellen der als Schaufelzwischenräume dienenden Ausnehmungen kann auch über Drahterodieren oder Wasserstrahlschneiden erfolgen. Das Drahterodieren sowie Wasserstrahlschneiden ist jedoch mit dem Nachteil verbunden, dass nur gerade Schnittflächen möglich sind, sodass eine konturnahe Herstellung der Ausnehmungen bzw. der Rohschaufeln nicht möglich ist.

Hiervon ausgehend liegt der vorliegenden Erfindung das Problem zu Grunde, ein neuartiges Verfahren zur Herstellung von integral beschaufelten Rotoren, insbesondere von Gasturbinenrotoren.

Dieses Problem wird durch ein Verfahren zur Herstellung von integral beschaufelten Rotoren, insbesondere von Gasturbinenrotoren, im Sinne des Patentanspruchs 1 gelöst.

Im Sinne der hier vorliegenden Erfindung wird vorgeschlagen, die als Schaufelzwischenräume dienenden Ausnehmungen durch ein elektrochemisches Bearbeiten des Rotorgrundkörpers herzustellen. Dabei wird erfindungsgemäß so vorgegangen, dass mehrere Arbeitselektroden gleichzeitig in den Rotorgrundkörper hineinbewegt werden, um mehrere als Schaufelzwischenräume dienende Ausnehmungen gleichzeitig herzustellen. Hierzu wird eine Relativbewegung zwischen den Arbeitselektroden und dem Rotorgrundkörper etabliert, wobei die Relativbewegung eine translatorische Bewegungskomponente und eine rotatorische Bewegungskomponente aufweist, die zumindest abschnittsweise bzw. teilweise überlagert sind. Durch die Überlagerung der translatorischen Bewegungskomponente und der rotatorischen Bewegungskomponente beim Herstellen der als Schaufelzwischenräume dienenden Ausnehmungen werden schraubenkonturförmige Ausnehmungen bereitgestellt, die bereits an die gewünschte Endkontur der Laufschaufeln des integral beschaufelten Rotors angepasst sind. Hierdurch wird es möglich, integral beschaufelte Rotoren durch eine elektrochemische Bearbeitung effizient herzustellen.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
- Fig. 1: eine Prinzipskizze einer erfindungsgemäßen Vorrichtung zur Herstellung von integral beschaufelten Rotoren, nämlich zum gleichzeitigen Herstellen mehrerer Rohschaufeln bzw. mehrerer als Schaufelzwischenräume dienender Ausnehmungen, zusammen mit einem Rotorgrundkörper in einem ersten Zustand;
- Fig. 2: die Vorrichtung der Fig. 1 zusammen mit dem Rotorgrundkörper in einem zweiten Zustand;
- Fig. 3: eine Prinzipskizze einer weiteren Arbeitselektrode zum nachfolgenden Bearbeiten der Rohschaufeln zur Bereitstellung strömungstechnischer Oberflächen im Bereich jeder Rohschaufel; und
- Fig. 4: eine Prinzipskizze mehrerer zusammenwirkender Arbeitselektroden gemäß Fig. 3.

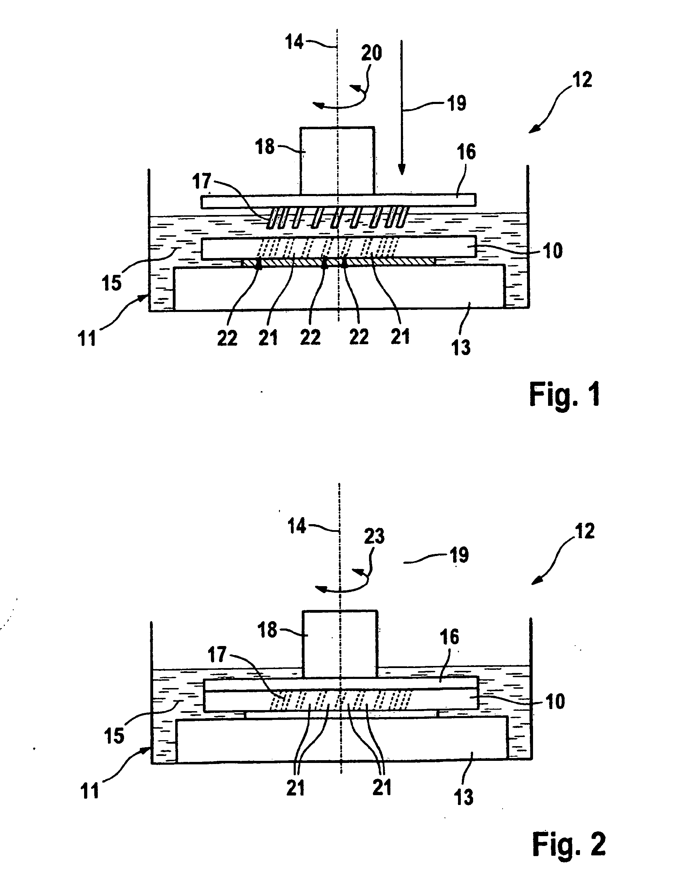

Nachfolgend wird die hier vorliegende Erfindung unter Bezugnahme auf Fig. 1 bis 4 in größerem Detail beschrieben.

Zum Herstellen eines integral beschaufelten Rotors wird im Sinne der hier vorliegenden Erfindung so vorgegangen, dass ein Rotorgrundkörper 10 bereitgestellt wird, wobei der Rotorgrundkörper 10 in einer Aufnahme 11 einer insgesamt mit der Bezugsziffer 12 gekennzeichneten Vorrichtung zum Herstellen eines integral beschaufelten Rotors positioniert wird.

Die Aufnahme 11 der Vorrichtung 12 umfasst eine Halterung 13, auf welcher der Rotorgrundkörper 10 angeordnet wird. Auf der Halterung 13 ist der Rotorgrundkörper 10 drehbar gelagert. Gemäß Fig. 1 ist der Rotorgrundkörper 10 derart auf der Halterung positioniert, dass eine Längsmittelachse 14 des Rotorgrundkörpers 10 in vertikaler Richtung verläuft. Eine Radialrichtung bzw. Radialerstreckung des Rotorgrundkörpers 10 verläuft demnach dann, wenn der Rotorgrundkörper 10, wie in Fig. 1 gezeigt, auf der Halterung 13 angeordnet ist, in horizontaler Richtung. Wie Fig. 1 entnommen werden kann, dient die Aufnahme 11 neben der Lagerung des Rotorgrundkörpers 10 auch der Aufnahme eines Elektrolyts 15, welches zur nachfolgenden elektrochemischen ECM-Bearbeitung des Rotorgrundkörpers 10 erforderlich ist.

Die Vorrichtung 12 umfasst des weiteren einen Träger 16, an welchem mehrere identische Arbeitselektroden 17 befestigt sind. Der Träger 16 ist als Platte ausgebildet und an einem Werkzeugträger 18 befestigt, wobei die Arbeitselektroden 17 zusammen mit dem Träger 16 bzw. dem Werkzeugträger 18 einerseits in Richtung des Pfeils 19 translatorisch verfahrbar und andererseits im Sinne des Pfeils 20 rotatorisch drehbar sind. Alle Arbeitselektroden 17 sind demnach gemeinsam bzw. gleichzeitig translatorisch sowie rotatorisch bewegbar. Die Arbeitselektroden 17 verlaufen in etwa coaxial zur Längsmittelachse 14 des Rotorgrundkörpers 10.

Zur Herstellung des integral beschaufelten Rotors werden nun die am Träger 16 gelagerten Arbeitselektroden 17 gleichzeitig in den Rotorgrundkörper 10 hineinbewegt, um so gleichzeitig mehrere Rohschaufeln 21 bzw. mehrere zwischen den Rohschaufeln 21 verlaufende, als Schaufelzwischenräume dienende Ausnehmungen 22 herzustellen. Hierzu wird eine Relativbewegung zwischen den Arbeitselektroden 17 und dem Rotorgrundkörper 10 etabliert, wobei die Relativbewegung eine translatorische Bewegungskomponente und eine rotatorische Bewegungskomponente aufweist.

Im Sinne der hier vorliegenden Erfindung werden die Arbeitselektroden 17 derart in den Rotorgrundkörper 10 hineinbewegt, dass in einem ersten Teilschritt die Relativbewegung zwischen den Arbeitselektroden 17 und dem Rotorgrundkörper 10 eine translatorische Bewegungskomponente im Sinne des Pfeils 19 mit einer überlagerten, rotatorischen Bewegungskomponente im Sinne des Pfeils 20 aufweist. Durch diese Überlagerung der translatorischen Verschiebung der Arbeitselektroden 17 mit einer rotatorischen Drehung derselben werden die Arbeitselektroden 17 schraubenförmig in den Rotorgrundkörper 10 hineinbewegt. Die translatorische Bewegungskomponente der Arbeitselektroden in diesem Teilschritt verläuft in Axialrichtung bzw. in Richtung der Längsmittelachse 14 des Rotorgrundkörpers. Eine Drehachse der rotatorischen Bewegungskomponente fällt mit der Längsmittelachse 14 bzw. der Drehachse des herzustellenden Rotors zusammen.

Anschließend an diesen ersten Teilschritt schließt sich ein zweiter Teilschritt an, in welchem die Relativbewegung zwischen den Arbeitselektroden 17 und dem Rotorgrundkörper 10 lediglich eine rotatorische Bewegungskomponente im Sinne des Pfeils 23 aufweist. Eine Drehachse der rotatorischen Bewegungskomponente fällt wieder mit der Längsmittelachse 14 bzw. der Drehachse des herzustellenden Rotors zusammen.

Der erste Teilschritt ist in Fig. 1 und der zweite Teilschritt ist in Fig. 2 gezeigt. Im zweiten Teilschritt gemäß Fig. 2 werden die im ersten Teilschritt gemäß Fig. 1 hergestellten, schraubenförmigen Ausnehmungen 22 in Umfangsrichtung des Rotorgrundkörpers 10 auf das gewünschte Maß aufgeweitet. Durch gleichzeitige Veränderung der Relativposition zwischen allen am Träger 16 befestigten Arbeitselektroden 17 zum Rotorgrundkörper 10 werden auch in diesem Teilschritt mehrere Ausnehmungen 21 gleichzeitig bearbeitet.

Die translatorische Relativbewegung zwischen den Arbeitselektroden 17 und dem Rotorgrundkörper 10 im ersten Teilschritt gemäß Fig. 1 wird durch ein Absenken der Arbeitselektroden 17 in Richtung des Pfeils 19 relativ zum Rotorgrundkörper 10 etabliert. Die rotatorische Bewegungskomponente kann durch Drehung der Arbeitselektroden und/oder des Rotorgrundkörpers 10 bereitgestellt werden. Dies gilt sowohl für den ersten Teilschritt gemäß Fig. 1 als auch für den zweiten Teilschritt gemäß Fig. 2.

An dieser Stelle sei darauf hingewiesen, dass zwischen dem ersten Teilschritt gemäß Fig. 1 und dem zweiten Teilschritt gemäß Fig. 2 die Arbeitselektroden 17 vorzugsweise aus den im ersten Teilschritt gemäß Fig. 1 hergestellten Ausnehmungen nochmals herausbewegt werden, bevor diese dann zur Aufweitung der Ausnehmungen in Umfangsrichtung im Sinne des zweiten Teilschritt gemäß Fig. 2 in die Ausnehmungen wieder eingeführt werden.

Wie bereits erwähnt, werden bei der oben beschriebenen Herstellung der Rohschaufeln 21 mehrere Arbeitselektroden 17 gleichzeitig in Form einer schraubenförmigen Bewegung in den Rotorgrundkörper 10 hineinbewegt. Die dabei ausgebildeten Rohschaufeln verfügen über ihre axiale Erstreckung über eine einheitliche bzw. konstante Dicke, sodass die Rohschaufeln demnach noch über keine strömungstechnischen Oberflächen, wie Saugseiten und Druckseiten, verfügen. Die strömungstechnischen Oberflächen werden in einem nachfolgenden Bearbeitungsschritt an den Rohschaufeln herausgearbeitet.

Bevor auf die Details eingegangen wird, die das Bearbeiten der Rohschaufeln 21 zur Bereitstellung strömungstechnischer Oberflächen betreffen, soll darauf hingewiesen werden, dass die Anzahl der Elektroden 17, die am Träger 16 gelagert sind, der Anzahl der gleichzeitig herzustellenden Ausnehmungen 22 entspricht. So ist es im Sinne der hier vorliegenden Erfindung möglich, über den Umfang des Rotorgrundkörpers 10 alle als Schaufelzwischenräume dienenden Ausnehmungen 22 gleichzeitig herzustellen. Hierzu sind dann über den gesamten Umfang des Trägers 16 die entsprechende Anzahl von Arbeitselektroden 17 positioniert.

Fig. 1 und 2 zeigen jedoch eine Ausführungsform, in welcher die als Schaufelzwischenräume dienenden Ausnehmungen 22 umfangssegmentweise hintereinander hergestellt werden, wobei je Umfangssegment mehrere als Schaufelzwischenräume dienende Ausnehmungen 22 gleichzeitig hergestellt werden. So sind in Fig. 1 insgesamt neun Arbeitselektroden 17 am Träger 16 befestigt, die zum Beispiel ein Umfangssegment von 45° abdecken und mithilfe derer gleichzeitig neun als Schaufelzwischenräume dienende Ausnehmungen 22 hergestellt werden können. Nach dem Herstellen dieser Ausnehmungen wird die Relativposition zwischen dem Träger 16 bzw. den Arbeitselektroden 17 und dem Rotorgrundkörper 10 derart geändert, dass im Anschluss in einem benachbarten Umfangssegment mehrere als Schaufelzwischenräume dienende Ausnehmungen 22 gleichzeitig hergestellt werden können. Decken die Arbeitselektroden 17 ein Umfangssegment von 45° ab, so werden dieselben insgesamt achtmal in den Rotorgrundkörper auf die oben beschriebene Art und Weise hineinbewegt. Auf diese Art und Weise werden dann hintereinander in den verschiedenen Umfangssegmenten die Ausnehmungen 22 hergestellt, wobei in jedem Umfangssegment gleichzeitig mehrere Ausnehmungen 22 hergestellt werden. Die Größe der von den Arbeitselektroden 17 abgedeckten Umfangssegmente liegt vorzugsweise zwischen 15° und 90°, insbesondere zwischen 30° und 60°. Bevorzugt ist eine Umfangssegmentgröße von 45°. Werden über den Umfang des Rotorgrundkörpers alle Ausnehmungen gleichzeitig hergestellt, so liegt lediglich ein Umfangssegment mit einer Größe von 360° vor. Die Größe der Umfangssegmente ist abhängig vom zur Verfügung stehenden, elektrischen Strom, der zur elektrochemischen Bearbeitung des Rotorgrundkörpers benötigt wird.

Im Zusammenhang mit dem gleichzeitigen Herstellen mehrerer Hohlschaufeln bzw. mehrerer als Schaufelzwischenräume dienender Ausnehmungen 22 sei darauf hingewiesen, dass stets für eine gleichmäßige Durchspülung der herzustellenden Ausnehmungen 22 mit Elektrolyt gesorgt wird. Dies kann zum Beispiel durch eine Umwälzung des Elektrolyts 15 mithilfe einer Pumpe erfolgen. Auch können die Arbeitselektroden 17 als Hohlelektroden ausgebildet sein, die von Elektrolyt durchströmt werden. So liegt es zum Beispiel im Sinne der hier vorliegenden Erfindung, die Arbeitselektroden 17, die am Träger 16 gelagert sind, als Hohlelektroden mit einer porösen 0berfläche auszuführen, derart, dass die Arbeitselektroden 17 innen von Elektrolyt durchströmt werden, welches über die poröse Oberfläche derselben in den Bereich der herzustellenden Ausnehmungen 22 gelangt. Hierdurch ist eine gleichmäßige Elektrolytversorgung im Bereich der herzustellenden Ausnehmungen 22 realisierbar.

Im Anschluss an das Herstellen der Rohschaufeln auf die oben beschriebene Art und Weise erfolgt im Sinne der hier vorliegenden Erfindung eine Bearbeitung der Rohschaufeln 21 zur Bereitstellung strömungstechnischer Oberflächen, nämlich zur Bereitstellung einer Saugseite sowie einer Druckseite, im Bereich jeder Rohschaufel. Diese Bearbeitung der Rohschaufeln zur Bereitstellung strömungstechnischer Oberflächen wird auch als Finishbearbeitung bezeichnet und wird im Sinne der hier vorliegenden Erfindung vorzugsweise durch elektrochemisches Bearbeiten, vorzugsweise durch einen PECM (Precise Electro Chemical Machining)-Prozess, realisiert.

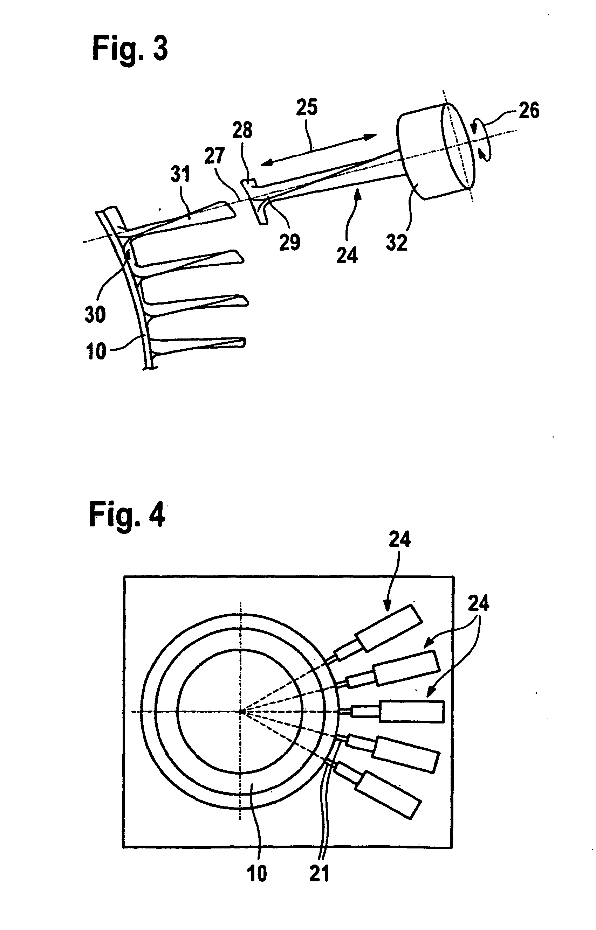

Zur Bereitstellung der strömungstechnischen Oberflächen im Bereich der Rohschaufeln 21 wird mindestens eine entsprechende Arbeitselektrode 24 (siehe Fig. 3) relativ zu den Rohschaufeln 21 bewegt, wobei die Relativbewegung zwischen der Arbeitselektrode 24 und der jeweiligen Rohschaufel eine translatorische Bewegungskomponente im Sinne des Pfeils 25 und eine rotatorische Bewegungskomponente im Sinne des Pfeils 26 umfasst. Die translatorische Bewegungskomponente verläuft in Radialrichtung der jeweiligen Rohschaufel und eine Drehachse der rotatorischen Bewegungskomponente fällt mit einer Zustellachse der translatorischen Bewegungskomponente zusammen. Die Zustellachse der translatorischen Bewegungskomponente und demnach die Drehachse der rotatorischen Bewegungskomponente ist in Fig. 3 mit der Bezugsziffer 27 gekennzeichnet.

Die in Fig. 3 dargestellte Arbeitselektrode 24 zur Herstellung einer Saugseite sowie einer Druckseite im Bereich jeder Rohschaufel 21 ist bevorzugt als Hohlelektrode ausgebildet, wobei die Innenkontur der Hohlelektrode der herzustellenden strömungstechnischen Oberfläche, nämlich der Saugseite sowie der Druckseite, entspricht. So verfügt die Arbeitselektrode 24 prinzipiell über zwei Abschnitte 28 und 29, wobei der Abschnitt 28 der Herstellung strömungstechnischer Oberflächen in einem Übergangsbereich 30 zwischen einer Laufschaufel 31 und dem Rotorgrundkörper 10 dient, und wobei der Abschnitt 29 der Bereitstellung der Saugseite sowie Druckseite der Laufschaufel 31 dient. Die Arbeitselektrode 24 ist an einem Träger 32 gelagert, über welchen die Arbeitselektrode 24 translatorisch in Richtung des Pfeils 25 sowie rotatorisch in Richtung des Pfeils 26 bewegt werden kann. Mit der in Fig. 3 gezeigten Arbeitselektrode 24 wird jede der Rohschaufeln nacheinander bearbeitet, um so zeitlich hintereinander im Bereich jeder Rohschaufel strömungstechnische Oberflächen herauszuarbeiten.

Fig. 4 zeigt eine Anordnung mehrerer Arbeitselektroden 24, um gleichzeitig mehrere Rohschaufeln 21 zur Bereitstellung strömungstechnischer Oberflächen zu bearbeiten. Jede dieser Arbeitselektroden 24 wird vorzugsweise über einen eigenen Motor angesteuert, um die erforderliche translatorische Bewegung mit überlagerter rotatorischer Bewegung für die Arbeitselektroden 24 bereitzustellen.

Im obigen Zusammenhang wurde davon ausgegangen, dass die oder jede Arbeitelektrode 24, welche zur Bereitstellung strömungstechnischer Oberflächen im Bereich der Rohschaufeln verwendet wird, als Hohlschaufel ausgebildet ist. Es sei darauf hingewiesen, dass selbstverständlich auch für die Bearbeitung einer Saugseite sowie einer Druckseite einer Rohschaufel jeweils eine entsprechend angepasste Arbeitselektrode verwendet werden kann.

Das erfindungsgemäße Verfahren zur Herstellung eines integral beschaufelten Gasturbinenrotors untergliedert sich demnach in zwei Hauptschritte:
In einem ersten Hauptschritt werden gleichzeitig mehrere Rohschaufeln bzw. als Schaufelzwischenräume dienende Ausnehmungen in einen Rotorgrundkörper eingearbeitet. In einem ersten Teilschritt (siehe Fig. 1) dieses ersten Hauptschritts werden mehrere Arbeitselektroden gleichzeitig in Form einer schraubenähnlichen Bewegung in den Rotorgrundkörper hineinbewegt. Die schraubenförmige Bewegung der Arbeitselektroden ergibt sich aus der Überlagerung einer translatorischen mit einer rotatorischen Bewegung. In einem zweiten Teilschritt (siehe Fig. 2) des ersten Hauptschritts werden die im ersten Teilschritt herausgearbeiteten Ausnehmungen in Umfangsrichtung aufgeweitet, indem eine rotatorische Relativbewegung zwischen den Arbeitselektroden und dem Rotorgrundkörper etabliert wird.

Im Anschluss hieran erfolgt in einem zweiten Hauptschritt (siehe Fig. 3) die Bearbeitung der im ersten Hauptschritt herausgearbeiteten Rohschaufeln. So wird im zweiten Hauptschritt jede Rohschaufel derart bearbeitet, dass anschließend strömungstechnische Oberflächen, nämlich eine Saugseite sowie eine Druckseite, im Bereich jeder Schaufel vorliegen. Auch der zweite Hauptschritt wird vorzugsweise durch elektrochemisches Bearbeiten mithilfe einer Arbeitselektrode durchgeführt. Es sei darauf hingewiesen, dass der zweite Hauptschritt alternativ auch durch Fräsen durchgeführt werden kann.

Mit der hier vorliegenden Erfindung ist eine effiziente sowie preiswerte Herstellung integral beschaufelter Rotoren möglich.

## Patentansprüche

1. Verfahren zur Herstellung von integra- bescraufelten Rotoren, insbesondere von Gasturbinenrotzren, durch elektröcherrische Bearbeitung eines in einem Elektrolyten angeordneten Rotorgrundkörpers (10) durch gleichzeitiges Herstellen mehrerer Rohschaufeln (21) durch Erzeugung mehrerer zwischen den Rohschaufeln (21) verlaufender, als Schaufelzwischenräume dienender Ausnehmungen (22), wobei mehrere Arbeitselektroden (17) gleichzeitig durch eine Relativbewegung zwischen dem Rotorgrundkörper (10) und den Arbeitselektroden (17) in den Rotorgrundkörper (10) hinein bewegt werden, wobei in einem ersten Teilschritt der elektrochemischen Bearbeitung die Relativbewegung eine translatorische Bewegungskomponente mit einer überlagerten rotatorischen Bewegunqskomponente aufweist, und einem der elektrochemischen Bearbeitung nachfolgenden Bearbeiten der Rohschaufeln zur Bereitstellung strömungstechnischer Oberflächen, insbesondere einer Saugseite und einer Druckseite, im Bereich jeder Rohschaufel, **dadurch gekennzeichnet, dass** zur Aufweitung der Ausnehmungen (22) in Umfangsrichtung in einem sich an den ersten Teilschritt anschließenden zweiten Teilschritt der elektrochemische Bearbeitung die Relativbewegung ausschließlich mit einer rotatorischen Bewegungskomponente und den selben Arbeitselektroden (17) durchgeführt wird.

2. Verfahren nach Anspruch 1,
**dadurch gekennzeichnet,**
**dass** die translatorische Bewegungskomponente der Arbeitselektroden in Axialrichtung des Rotorgrundkörpers verläuft.

3. Verfahren nach Anspruch 1 oder 2,
**dadurch gekennzeichnet,**
**dass** eine Drehachse der rotatorischen Bewegungskomponente mit einer Längsmittelachse oder Drehachse des herzustellenden Rotors zusammenfällt.

4. Verfahren nach Anspruch 1,
**dadurch gekennzeichnet,**
**dass** in dem ersten Teilschritt mehrere Arbeitse-ektroden gemeinsam in den feststehenden Rotorgrundkörper abgesenkt werden, und dass überlagert hierzu die Arbeitselektroden und/oder der Rotorgrundkörper gedreht werden.

5. Verfahren nach Anspruch 1,
**dadurch gekennzeichnet,**
**dass** in dem zweiten Teilschritt die Arbeitselektroden gedreht werden und/oder der Rotorgrundkörper gedreht wird.

6. Verfahren nach einem oder mehreren der Ansprüche 1 bis 5,
**dadurch gekennzeichnet,**
**dass** über den Umfang des Rotorgrundkörpers alle als Schaufelzwischenräume dienenden Ausnehmungen gleichzeitig hergestellt werden.

7. Verfahren nach einem oder mehreren der Ansprüche 1 bis 5,
**dadurch gekennzeichnet,**
**dass** die als Schaufelzwischenräume dienenden Ausnehmungen umfangssegmentweise hintereinander hergestellt werden, wobei je Umfangssegment mehrere als Schaufelzwischenräume dienende Ausnehmungen gleichzeitig hergestellt werden.

8. Verfahren nach Anspruch 7,
**dadurch gekennzeichnet,**
**dass** in ümfangssegmenten mit einer Größe von 15° bis 90°, insbesondere von 30° bis 60°, mehrere als Schaufelzwischenräume dienende Ausnehmungen gleichzeitig hergestellt werden.

9. Verfahren nach Anspruch 1,
**dadurch gekennzeichnet,**
**dass** die Arbeitselektroden zwischen dem ersten Teilschritt und dem zweiten Teilschritt aus dem Rotorgrundkörper heraus bewegt werden.

10. Verfahren nach einem oder mehreren der Ansprüche 1 bis 9,
**dadurch gekennzeichnet,**
**dass** das nachfolgende Bearbeiten der Rohschaufeln zur Bereitstellung strömungszechnischer Oberflächen ebenfalls durch elektrochemisches Bearbeiten, insbesondere durch einen PECM-Prozess, erfolgt.

11. Verfahren nach Anspruch 10,
**dadurch gekennzeichnet,**
**dass** hierzu mindestens eine Arbeitselektrode relativ zu den Rohschaufeln bewegt wird.

12. Verfahren nach Anspruch 11,
**dadurch gekennzeichnet,**
**dass** die Relativbewegung zwischen der oder jeder Arbeitselektrode und der jeweiligen Rohschaufeln eine translatorische Bewegungskomponente mit überlagerter rotatorischer Heraegungskomponente aufweist.

13. Verfahren nach Anspruch 12,
**dadurch gekennzeichnet,**
**dass** die translatorische Bewegungskomponente der Arbeitselektroden in Radialrichtung der jeweiligen Rohschaufel verläuft.

14. Verfahren nach Anspruch 12 oder 13,
**dadurch gekennzeichnet,**
**dass** eine Drehachse der rotatorischen Bewegungskomponente mit einer Zustellachse der translatorischen Bewegungskomponente zusammenfällt.

15. Verfahren nach einem oder mehreren der Ansprüche 1 bis 14,
**dadurch gekennzeichnet,**
**dass** beim nachfolgenden Bearbeiten mehrere Rohschaufeln gleichzeitig bearbeitet werden.

16. Verfahren nach einem oder mehreren der Ansprüche 1 bis 14,
**dadurch gekennzeichnet,**
**dass** beim nachfolgenden Bearbeiten die Rchschaufel hintereinander bearbeitet werden.

## Claims

1. A method of manufacturing integrally bladed rotors, in particular gas turbine rotors, by electrochemical machining of a rotor basic body (10) disposed in an electrolyte by simultaneously manufacturing a plurality of unfinished blades (21) by producing a plurality of recesses (22) serving as blade gaps that extend between the unfinished blades (21), wherein a plurality of working electrodes (17) are moved simultaneously into the rotor basic body (10) by means of a relative movement between the rotor basic body (10) and the working electrodes (17), wherein in a first partial step of the electrochemical machining the relative movement comprises a component of translatory motion with a superimposed component of rotatory motion, and subsequent to the electrochemical machining a machining of the unfinished blades in order to provide flow surfaces, in particular a suction side and a discharge end, in the region of each unfinished blade, **characterized in that**, for widening the recesses (22) in circumferential direction, in a second partial step of the electrochemical machining that follows the first partial step the relative movement is carried out exclusively with a component of rotatory motion and the same working electrodes (17).

2. A method according to claim 1,
**characterized in that**
the component of translatory motion of the working electrodes (17) extends in the axial direction of the rotor basic body.

3. A method according to claim 1 or 2,
**characterized in that**
an axis of rotation of the component of rotatory motion coincides with a longitudinal centre line or axis of rotation of the rotor to be manufactured.

4. A method according to claim 1,
**characterized in that**
in the first partial step a plurality of working electrodes are lowered jointly into the fixed rotor basic body, and superimposed thereon the working electrodes and/or the rotor basic body are rotated.

5. A method according to claim 1,
**characterized in that**
in the second partial step the working electrodes are rotated and/or the rotor basic body is rotated.

6. A method according to one or more of claims 1 to 5,
**characterized in that**
over the circumference of the rotor basic body all of the recesses serving as blade gaps are manufactured simultaneously.

7. A method according to one or more of claims 1 to 5,
**characterized in that**
the recesses serving as blade gaps are manufactured successively in circumferential segments, wherein in each circumferential segment several recesses serving as blade gaps are manufactured simultaneously.

8. A method according to claim 7,
**characterized in that**
in circumferential segments having a size of 15° to 90°, in particular of 30° to 60°, a plurality of recesses serving as blade gaps are manufactured simultaneously.

9. A method according to claim 1,
**characterized in that**
between the first partial step and the second partial step the working electrodes are moved out of the rotor basic body.

10. A method according to one or more of claims 1 to 9,
**characterized in that**
the subsequent machining of the unfinished blades to provide flow surfaces is effected likewise by electrochemical machining, in particular by a PECM process.

11. A method according to claim 10,
**characterized in that**
for this purpose at least one working electrode is moved relative to the unfinished blades.

12. A method according to claim 11,
**characterized in that**
the relative movement between the, or each, working electrode and the respective unfinished blade comprises a component of translatory motion with a superimposed component of rotatory motion.

13. A method according to claim 12,
**characterized in that**
the component of translatory motion of the working electrodes extends in the radial direction of the respective unfinished blade.

14. A method according to claim 12 or 13,
**characterized in that**
an axis of rotation of the component of rotatory motion coincides with an infeed axis of the component of translatory motion.

15. A method according to one or more of claims 1 to 14,
**characterized in that**
during the subsequent machining a plurality of unfinished blades are machined simultaneously.

16. A method according to one or more of claims 1 to 14,
**characterized in that**
during the subsequent machining the unfinished blades are machined successively.

## Revendications

1. Procédé de fabrication de rotors intégralement munis de pales, en particulier de rotors pour turbines à gaz, par usinage électrochimique d'un corps de base de rotor (10) disposé dans un électrolyte et fabrication simultanée de plusieurs pales brutes (21) en réalisant plusieurs évidements (22) entre les pales brutes (21) servant d'espaces entre pales, plusieurs électrodes de travail (17) pouvant être déplacées en même temps, dans un mouvement relatif, entre le corps de base de rotor (10) et les électrodes de travail (17) vers l'intérieur du corps de base de rotor (10), alors que, dans une première étape partielle de l'usinage électrochimique, le mouvement relatif présente une composante translatoire avec une composante rotatoire superposée et lors d'une opération d'usinage des pales brutes, consécutive à l'usinage électrochimique, destinée à fournir des surfaces techniques en termes d'écoulement, en particulier un extrados et un intrados, au niveau de chaque pale brute, **caractérisé en ce que** pour élargir les évidements (22) dans le sens périphérique dans une deuxième étape partielle de l'usinage électrochimique consécutive à la première, le mouvement relatif est exécuté exclusivement avec une composante de mouvement rotatoire et les mêmes électrodes de travail (17).

2. Procédé selon la revendication 1, **caractérisé en ce que** la composante de mouvement translatoire des électrodes de travail passe dans le sens axial du corps de base du rotor.

3. Procédé selon la revendication 1 ou la revendication 2, **caractérisé en ce qu'**un axe de rotation de la composante de mouvement rotatoire coïncide avec un axe central longitudinal ou axe de rotation du rotor à fabriquer.

4. Procédé selon la revendication 1, **caractérisé en ce que**, dans une première étape partielle, on abaisse plusieurs électrodes de travail en même temps dans le corps de base de rotor fixe et on fait tourner, en superposition, les électrodes de travail et/ou le corps de base du rotor.

5. Procédé selon la revendication 1, **caractérisé en ce que**, dans une deuxième étape partielle, on fait tourner les électrodes de travail et/ou le corps de base du rotor.

6. Procédé selon l'une quelconque ou plusieurs des revendications 1 à 5, **caractérisé en ce qu'**on réalise en même temps tous les évidements servant d'espaces entre pales sur la périphérie du corps de base du rotor.

7. Procédé selon l'une quelconque ou plusieurs des revendications 1 à 5, **caractérisé en ce qu'**on réalise les évidements servant d'espaces entre pales l'un après l'autre par segment de périphérie, plusieurs évidements servant d'espaces entre pales étant réalisés en même temps pour chaque segment de périphérie.

8. Procédé selon la revendication 7, **caractérisé en ce que**, dans des segments de périphérie mesurant de 15° à 90°, en particulier de 30° à 60°, on réalise en même temps plusieurs évidements servant d'espaces entre pales.

9. Procédé selon la revendication 1, **caractérisé en ce qu'**on déplace les électrodes de travail entre la première étape partielle et la deuxième étape partielle hors du corps de base du rotor.

10. Procédé selon l'une quelconque ou plusieurs des revendications 1 à 9, **caractérisé en ce que** l'usinage subséquent des pales brutes destiné à fournir des surfaces techniques en termes d'écoulement est également un usinage électrochimique, en particulier une méthode PECM.

11. Procédé selon la revendication 10, **caractérisé en ce qu'**à cet effet, on déplace au moins une électrode de travail par rapport aux pales brutes.

12. Procédé selon la revendication 11, **caractérisé en ce que** le mouvement relatif entre la ou chaque électrode de travail et la pale brute respective présente une composante de mouvement translatoire avec une composante rotatoire superposée.

13. Procédé selon la revendication 12, **caractérisé en ce que** la composante de mouvement translatoire des électrodes de travail passe dans le sens radial de la pale brute respective.

14. Procédé selon la revendication 12 ou la revendication 13, **caractérisé en ce qu'**un axe de rotation de la composante de mouvement translatoire coïncide avec un axe de transfert de la composante de mouvement translatoire.

15. Procédé selon l'une quelconque ou plusieurs des revendications 1 à 14, **caractérisé en ce que** lors de l'usinage qui suit, on usine en même temps plusieurs pales brutes.

16. Procédé selon l'une quelconque ou plusieurs des revendications 1 à 14, **caractérisé en ce que** lors de l'usinage qui suit, on usine les pales brutes l'une après l'autre.
